# EUROPEAN PATENT APPLICATION

(11) **EP 2 663 153 A2**
(43) Date of publication of application: **13.11.2013**
(21) Application number: 13167231.3
(22) Date of filing: 10.05.2013
(51) Int. Cl.: H04W 72/12

(54) **Quality of Service Prioritisation**

(30) Priority: 10.05.2012 ES 201230705
(71) Applicant: Vodafone IP Licensing Limited, The Connection Newbury Berkshire RG14 2FN (GB); Vodafone España, S.A.U., 28108 Alcobendas (ES)
(72) Inventor: De Pasquale, Andrea, 28108 Alcobendas (ES); Serrano Solsona, Clara, 28108 Alcobendas (ES); Dominguez Romero, Francisco Javier, 28108 Alcobendas (ES)
(74) Representative: Boult Wade Tennant

(57) **Abstract**

A cellular network comprises a base station in communication with a plurality of User Equipment stations. A scheduling controller for an entity in the cellular network is configured to allocate a priority to the transmissions for each of the plurality of User Equipment stations according to a device type determined for the respective User Equipment station. A User Equipment device analyser for an entity in a cellular network, configured to determine a device type for a User Equipment station within the cellular network on the basis of one or more of: the IMEI of the User Equipment station; the traffic pattern for previous communications between the cellular network and the User Equipment station; and a terminal type information transmitted by the User Equipment station within HTTP data.

## Description

### Technical field of the Invention

The present invention concerns a scheduling controller or a User Equipment device analyser for an entity in a cellular network. In particular, these may form part of or work in cooperation with a Radio Network Controller (RNC), such as used in UTRAN and E-UTRAN systems.

### Background to the Invention

The user experience when accessing data-based services on a User Equipment (UE) device depends upon the type of device and the Quality of Service (QoS) provided by the cellular network. Different types of devices current exist, including: smartphones; routers (such as for WiFi); tablet computers; Machine-to-Machine (M2M) devices; other forms of mobile telephone. Moreover, specific devices can be categorised by one or more of their: manufacturer and model; specific hardware composition, configuration or both; operating system (when including a microprocessor); and hardware-specific software (such as middleware).

Within the cellular network, QoS configuration by tailoring the prioritisation of traffic for different users is known. This is especially effective when congestion is present within an internal interface between entities of the access network or core network. For example, EP-2 154 837 suggests a method for prioritising traffic over the Iub interface in a UTRAN network. The Allocation Retention Priority (ARP) and Traffic Handling Priority (THP) parameters stored in the Home Location Register (HLR) of the core network are set to effect a user priority. These parameters are mapped to a Scheduling Priority Indicator (SPI) index and SPI weight in the Radio Network Controller (RNC) which is used to configure the scheduling of transmissions in the Node B.

This priority can be set on the basis of the application being operated by the user (for example, VoIP, web-browsing, streaming) or on the basis of the user's subscription information. This data is available to access network and core network entities. Further improving the user experience remains a challenge though.

### Summary of the Invention

Against this background and in a first aspect, there is provided a scheduling controller for an entity in a cellular network. The cellular network comprises a base station in communication with a plurality of User Equipment stations. The scheduling controller is configured to allocate a priority to the transmissions for each of the plurality of User Equipment stations according to a device type determined for the respective User Equipment station.

Using a determined device type differs significantly from existing techniques in which the operated application or user's subscription information is used for allocating priority to transmissions. Prioritisation of transmissions has previously ignored device type. This may be for a number of reasons. Applications may be operable using multiple different devices and device types. Indeed, the device type may be independent from any applications that the user operates on the device. Moreover, it has previously been understood that Quality of Service should not vary when different users use the same application, except where their subscription characteristics differ in this regard.

Advantageously, it is now recognised that the user experience may be closely related to the device type, in terms of the hardware, operating system and hardware-specific middleware or software of the device, or the combination of some or all of these features. For example, users of a device with high-performance hardware (such as a fast processor) may be capable of processing received data at a significantly faster rate than users with a device having a lower performance hardware (for example a slower processor). In such cases, increasing the priority for transmissions for the user with the higher performance device may significantly improve their experience. In contrast, reducing the priority for transmissions for the user with the lower performance device may actually have no significant impact on their experience.

In the preferred embodiment, the scheduling controller is configured to allocate a priority to transmissions for a user by setting a parameter associated with user, the parameter being for use by an associated scheduler in determining the scheduling priority of transmissions for the user. In UMTS systems, especially for Enhanced Uplink (EUL) and/or High Speed Downlink Packet Access (HSDPA), the parameter may be at least one of: an Allocation Retention Priority (ARP); a Traffic Handling Priority (THP); a Scheduling Priority Indicator (SPI), SPI index; and an SPI weight. These parameters are defined in the Third Generation Partnership Project (3GPP) Technical Specification TS 25.433. In Long Term Evolution (LTE) systems, the parameter may be at least one of: a QoS Class Identifier (QCI); and a Subscriber Profile ID (SPID).

Advantageously, the scheduling controller is further configured to determine the respective device type for each of the plurality of User Equipment stations. Alternatively, this functionality can be carried out by a separate device, such as a User Equipment device analyser, which is another aspect of the invention to be discussed below. Optionally, the device type may be determined on the basis of one or more of: an indication of the device type transmitted by the User Equipment station to the cellular network; the International Mobile Equipment Identity, IMEI, of the User Equipment station; the traffic pattern for previous communications between the cellular network and the User Equipment station; and a terminal type information transmitted by the User Equipment station within Hypertext Transfer Protocol (HTTP) data.

Typically, the device type is indicative of one or more of: the hardware composition of the User Equipment station; the hardware configuration of the User Equipment station; the operating system used by the User Equipment station; the manufacturer of the User Equipment station; and the model of the User Equipment station. For example, a manufacturer and model may be sufficient to identify all of the hardware for many devices. For other devices, information such as the operating system will be beneficial in addition.

In a second aspect, there is provided a User Equipment (UE)device analyser for an entity in a cellular network. This is configured to determine a device type for a User Equipment station within the cellular network on the basis of one or more of: the traffic pattern for previous communications between the cellular network and the User Equipment station; and a terminal type information transmitted by the User Equipment station within Hypertext Transfer Protocol, HTTP, data. Optionally, the device type for the User Equipment station may additionally be determined on the basis of one or more of: an indication of the device type transmitted by the User Equipment station to the cellular network; and the International Mobile Equipment Identity, IMEI, of the User Equipment station. These additional parameters may be used in combination with the traffic pattern or terminal type information or both.

Identification of the device type using these pieces of information has not been considered until now. All of these require significant processing requirements and have therefore not previously been considered as potential approaches for carrying out such an identification. Advantageously, they represent improved ways to identify the device type without the need to increase data overheads in the transmissions from the UE.

Beneficially, the identified device type indicates one or more of: the hardware composition of the User Equipment station; the hardware configuration of the User Equipment station; the operating system used by the User Equipment station; the manufacturer of the User Equipment station; and the model of the User Equipment station.

In another aspect, there may be provided a Radio Network Controller (RNC) for a cellular network comprising at least one of: a scheduling controller as described herein; and a User Equipment device analyser as described herein.

In a further aspect, the invention may provide a base station for a cellular network comprising at least one of: a scheduling controller as described herein; and a User Equipment device analyser as described herein. The base station may be a Long Term Evolution (LTE or E-UTRAN) eNodeB, a UTRAN NodeB or a GSM Base Transceiver Station (BTS).

In an alternative aspect of the invention, there is provided a method of allocating a priority for transmissions between a base station of a cellular network and each of a plurality of User Equipment station. The method comprises: allocating a priority to the transmissions for each of the plurality of User Equipment stations according to a device type determined for the respective User Equipment station.

The method optionally further comprises: determining a respective device type for each of the plurality of User Equipment stations. In such cases, the step of determining the device type for each User Equipment station is preferably based on one or more of: an indication of the device type transmitted by the respective User Equipment station to the cellular network; the International Mobile Equipment Identity, IMEI, of the respective User Equipment station; the traffic pattern for previous communications between the cellular network and the respective User Equipment station; and a terminal type information transmitted by the respective User Equipment station within Hypertext Transfer Protocol, HTTP, data.

In yet another aspect of the present invention, there is provided a method of determining, at an entity of a cellular network, a device type for a User Equipment station within the cellular network on the basis of one or more of: the International Mobile Equipment Identity, IMEI, of the User Equipment station; the traffic pattern for previous communications between the cellular network and the User Equipment station; and a terminal type information transmitted by the User Equipment station within Hypertext Transfer Protocol, HTTP, data.

In any of these method aspects of the invention, the device type may be indicated by one or more of: the hardware composition of the User Equipment station; the hardware configuration of the User Equipment station; the operating system used by the User Equipment station; and the manufacturer of the User Equipment station.

It will be understood that this method can optionally comprise steps or features used to carry out any of the actions described in connection with the active antenna controller detailed above. Also, any combination of the individual apparatus features or method features described may be implemented, even though not explicitly disclosed.

In a yet further aspect, the present invention may be found in a computer program, configured when operated by a processor to carry out any of the methods described herein. Alternatively, the present invention may be embodied in programmable logic, configured upon operation to carry out any of the methods described herein.

### Brief Description of the Drawings

The invention may be put into practice in various ways, one of which will now be described by way of example only and with reference to the accompanying drawings in which:
Figure 1 shows a schematic diagram of some elements of an existing cellular network; and
Figure 2 illustrates a flow diagram in accordance with an embodiment.

### Detailed Description of a Preferred Embodiment

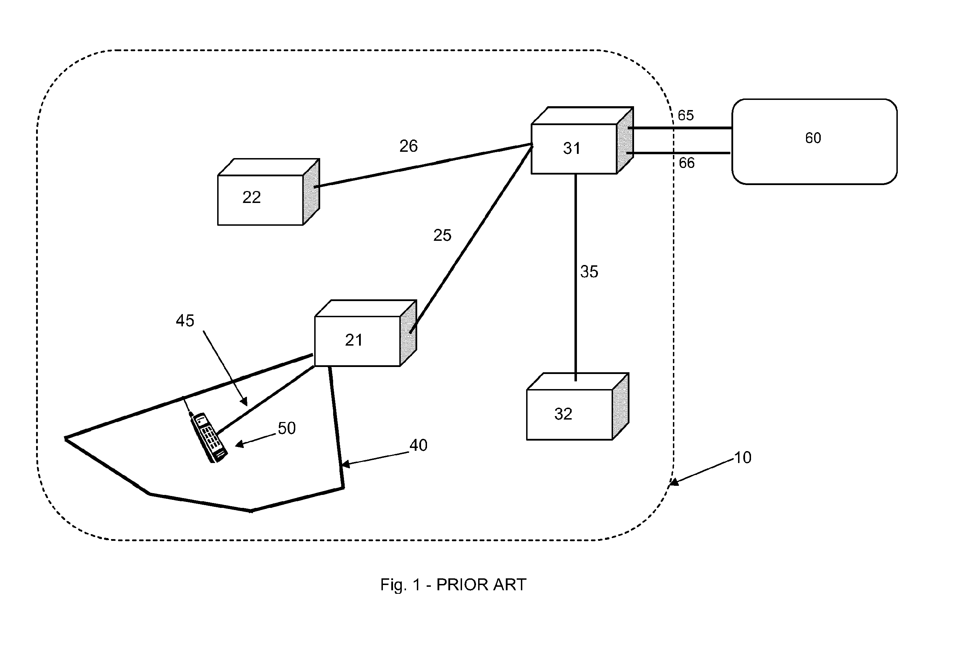

Referring first to Figure 1, there is shown a schematic diagram of some elements of an existing cellular network. In this example, the relevant cellular network is a UMTS Terrestrial Radio Access Network (UTRAN). However, the invention may be applied to a range of different cellular networks, including E-UTRAN and GERAN. The UTRAN portion 10 of the cellular network comprises: a first Node B 21; a second Node B 22; a first Radio Network Controller (RNC) 31; a second RNC 32; and a User Equipment (UE) 50.

A coverage area 40 for the first Node B 21 is also shown. Although only one UE 50 is shown in Figure 1, it will be recognised that the first Node B 21 coverage area 40 will likely include multiple UEs. Each UE 50 will have a specific device type. The device type of the UEs 50 in the coverage area 40 may vary, although some may be similar or even identical.

Some interfaces between the first RNC 31 and the core network (CN) 60 are also shown. Between the first Node B 21 and the first RNC 31, the IuB interface 25 is shown. Similarly, the IuB interface 26 between the second Node B 22 and the first RNC 31 is shown. The IuR interface 35 between the first RNC 31 and the second RNC 32 is detailed, as is the Uu interface 45 between the UE 50 and the first node B 21. Finally, Figure 1 also shows the IuCS interface 65 and the IuPS interface 66 between the first RNC 31 and the CN 60.

Details of the operation of these entities and interfaces may be found in 3GPP technical specifications. Moreover, a use of these entities and interfaces for scheduling or prioritisation of transmissions in a congestion situation may be found in EP-2154837.

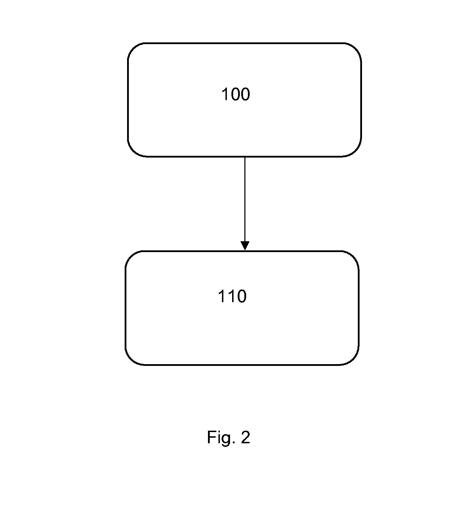

Referring next to Figure 2, there is shown a flow diagram in accordance with an embodiment. In a first step 100, a respective device type is determined for each of the plurality of UEs within a portion of the cellular network. In practice, this is likely to be in respect of some or all of the UEs in the coverage area of a Node B. The implementation of this step will be discussed in more detail below.

Subsequent to step 100, step 110 is carried out. In this step, a priority is allocated to the transmissions for each of the plurality of UEs according to the device type determined for that UE. Again, the implementation of this step will be discussed in more detail below. These two steps can be carried out separately, in different entities of the cellular network or in combination. However, they are preferably carried out in sequence and in the same entity of the cellular network.

The device type of the UE 50 may, for instance, include: a USB dongle; a PC; a tablet; a smartphone; a WiFi router; a Machine-to-Machine (M2M) or Machine Type Communication (MTC) device; or another type of mobile telephone. The device type can alternatively be identified by the manufacturer and model of the UE, or the components and/or configuration of the hardware, the operating system, firmware, middleware or other hardware-specific software in the UE. It will be recognised that the device type is not the same as the application operated by the UE device. Many devices can use a wide range of applications. That said, some devices may be optimised for specific types of application. Consequently, there may be some correlation between the device type and the form of data traffic received and/or transmitted by the device.

There are multiple different ways of detecting the device type. This is carried out at the RNC or at the entity within the UTRAN 10 where the radio resource management function is located, if not the RNC. This will be discussed in more depth below.

The following examples may be used for detecting the device type. They may be implemented individually or in any combination.
1. New UE capabilities may be introduced, such that during call set-up, the RNC is made aware of the terminal type. This can be implemented by including a new Information Element (IE) or extending an existing IE. This IE may be called "terminal type".
2. The RNC may retrieve the IMEI information of the terminal during the call set-up by using the Non-Access Stratum (NAS) signalling (such as the authentication and ciphering request) or by requesting this information from the CN 60. In the case of the LTE eNodeB, it may not be possible to use the NAS signalling if it is encrypted from the UE 50 to the Mobility Management Entity (MME). Then, this information may be requested from the CN 60. The IMEI may be correlated with the device type information stored in an external database belonging to the Operations Supports Systems (OSS).
3. The RNC may be adapted to receive the device type from the CN 60, for example from smart charging information. The CN 60 may mark the packets with this information, from which the RNC can derive the UE device type.
4. The RNC may establish the device type based on the traffic that is visible to it. This information can be determined by analysing the use traffic pattern for a specific UE (or more correctly a specific subscriber identity module, SIM) during a period of time. This period of time may be a number of minutes, hours or days. The traffic pattern analysis may take a number of different forms, using, for example: Circuit-Switched (CS) traffic usage; location information; number of applications being used; size and/or period of traffic type; other IE information accessible at the RNC. Any single item or combination of this data may be used to determine the device type. Examples are discussed below.
   No usage of CS calls may indicate that the device is not a smartphone or a normal phone. Using the cell or location area, the RNC may determine that the position of the device is static. In that case, it may be a M2M or WiFi router. If the RNC detects that a number of applications are being used as the same time by the device, it is likely to be a WiFi router. By analysing the size and period of the traffic type, it may be established that the device may send periodical data with a fixed packet size possession. In such cases, the device is likely to be a M2M device. Moreover, tablets and USB dongles can be differentiated from smartphones in the RNC by accessing the 3GPP IE "battery-limited device". Tablets and USB dongles are not battery-limited.
5. The RNC may retrieve the terminal type information from web browser traffic. Deep Packet Inspection (DPI) functionality may need to be added to the RNC in order to access this information.

Once the device type information is made available to the RNC, it can determine the priority to be allocated to the device. The RNC may load a database from the OSS with this information. This may comprise a matrix of QoS or application priorities to be applied to this Radio Access Bearer (RAB) connection until the RAB is closed. This information may be used on its own or in combination with the user subscription information and/or any congestion information.

Within the CN 60, QoS profiles may be defined in the Home Location Register (HLR). This may be defined using Allocation Retention Priority (ARP) and, for interactive class traffic, a Traffic Handling Priority (THP). Lower values of ARP and THP indicate higher priority.

3GPP TS 25.433 ("UTRAN IuB interface Node B Application Part (NBAP) signalling") defines an approach for QoS radio prioritisation in the Radio Access Network (RAN) and especially the RNC, such as first RNC 31. This approach uses a Scheduling Priority Indicator (SPI). An SPI index may be used alone, or in combination with an SPI weight. These provide different priorities for the traffic and the relative weight to be applied among them. Means for effecting these priorities will be discussed below.

Dependent upon their subscription data and specifically the ARP and THP stored in the HLR, users may be categorised with higher priority (for example, Gold) or lower priority (for example, Silver). This information may be passed to the RAN and translated into appropriate SPI parameters. In some cases the HLR may also use knowledge of the device type to adjust the ARP and THP accordingly. However, it is currently envisaged that the RNC will determine the device type and then adjust the SPI parameters appropriately.

For example, the following table illustrates how the device type prioritisation might be implemented using the SPI index and SPI weight.

| **User Class** | **Device Type** | **SPI Index** | **SPI Weight** |
|---|---|---|---|
| Gold | USB dongle | 6 | 5 |
| Gold | Smartphone | 1 | 100 |
| Gold | Tablet | 2 | 80 |
| Gold | M2M | 8 | 1 |
| Silver | USB dongle | 6 | 5 |
| Silver | Smartphone | 3 | 65 |
| Silver | Tablet | 4 | 40 |
| Silver | M2M | 8 | 1 |

It will therefore be established that smartphone and tablet users always obtain a higher priority than USB dongle or M2M users. Moreover, the priority of gold users is increased with respect to silver users. Thus, this prioritisation may be applied as usual when the congestion occurs in different interfaces or radio resources of the radio access network.

In UTRAN systems, the prioritisation may be implemented, at least in part, by an High Speed Packet Access (HSPA) scheduler. The HSPA scheduler allocates resources to transmissions, by defining a probability of being scheduled, on the basis of: Radio conditions; scheduler algorithm (such as Proportional Fair, Round Robin, etc); UE category; and User Priority (that is, SPI parameters). SPI indices define the priority and SPI weights are used additionally to weight the transmissions for each user in the Node B (when there is congestion in radio resources).

Additionally or alternatively, prioritisation can be implemented across the IuB interface 25, for example between the first Node B 21 and the first RNC 31. Flow control is linked to the Scheduling behaviour, but it is normally independent from the transport network (for example, ATM and/or IP). It is typically used as a protection mechanism to control the traffic flow in the Enhanced Uplink (EUL) and/or High Speed Downlink Packet Access (HSDPA) to avoid retransmissions and discarded packets resulting from congesting in the IuB interface 25. The total available bandwidth over the interface is shared out according the QoS parameters (such as SPI index and SPI weight). Higher priority transmissions are allocated more bandwidth, thereby providing better QoS.

In another approach, traffic separation may be applied over ATM and IP based on the QoS parameters defined at the RNC. The QoS parameters may then be used to map the different user priorities to the different classes of ATM and IP (such as CBR, rtVBR, Diffserv, etc).

Although an embodiment of the invention has been described above, the skilled person will recognise that various modifications or adjustments can be made. For example, although the above system is described for downlink traffic prioritisation, it will be appreciated that uplink traffic prioritisation can also be affected on the basis of the device type.

The skilled person will understand that QoS differentiation by prioritisation can be accompanied by data throughput restrictions, for example speed throttling or minimum guaranteed bitrates. Additionally or alternatively, prioritisation can be made according to other parameters, such as application type. For example, priority applied to voice data may be greater than that applied to video call data, which may in turn be greater than that applied to interactive or background class traffic. In other cases, prioritisation may not occur based on user subscription information.

The determination of the device type has been described above as being implemented at the RNC, but it could be implemented in another entity of the RAN 10 or CN 60. Moreover, the skilled person would readily understand possible adaptation of the present invention to other cellular network architectures, such as LTE. In LTE, the Allocation Retention Priority (ARP) and Traffic Handling Priority (THP) might be replaced by a QoS Class Identifier (QCI) and Subscriber Profile ID (SPID) respectively.

## Claims

1. A scheduling controller for an entity in a cellular network, the cellular network comprising a base station in communication with a plurality of User Equipment stations, the scheduling controller being configured to allocate a priority to the transmissions for each of the plurality of User Equipment stations according to a device type determined for the respective User Equipment station.

2. The scheduling controller of claim 1, wherein the scheduling controller is configured to allocate a priority to transmissions for a user by setting a parameter associated with user, the parameter being for use by an associated scheduler in determining the scheduling priority of transmissions for the user.

3. The scheduling controller of claim 1 or claim 2, further configured to determine the respective device type for each of the plurality of User Equipment stations.

4. The scheduling controller of claim 3, wherein the device type is determined on the basis of one or more of: an indication of the device type transmitted by the User Equipment station to the cellular network; the International Mobile Equipment Identity, IMEI, of the User Equipment station; the traffic pattern for previous communications between the cellular network and the User Equipment station; and a terminal type information transmitted by the User Equipment station within Hypertext Transfer Protocol, HTTP, data.

5. The scheduling controller of any preceding claim, wherein the device type is indicative of one or more of: the hardware composition of the User Equipment station; the hardware configuration of the User Equipment station; the operating system used by the User Equipment station; the manufacturer of the User Equipment station; and the model of the User Equipment station.

6. A User Equipment device analyser for an entity in a cellular network, configured to determine a device type for a User Equipment station within the cellular network on the basis of one or more of: the traffic pattern for previous communications between the cellular network and the User Equipment station; and a terminal type information transmitted by the User Equipment station within Hypertext Transfer Protocol, HTTP, data.

7. The User Equipment device analyser of claim 6, wherein the device type indicates one or more of: the hardware composition of the User Equipment station; the hardware configuration of the User Equipment station; the operating system used by the User Equipment station; the manufacturer of the User Equipment station; and the model of the User Equipment station.

8. A Radio Network Controller, RNC, for a cellular network comprising at least one of: the scheduling controller of any of claims 1 to 5; and the User Equipment device analyser of claim 6 or claim 7.

9. A base station for a cellular network comprising at least one of: the scheduling controller of any of claims 1 to 5; and the User Equipment device analyser of claim 6 or claim 7.

10. A method of allocating a priority for transmissions between a base station of a cellular network and each of a plurality of User Equipment stations, the method comprising:
allocating a priority to the transmissions for each of the plurality of User Equipment stations according to a device type determined for the respective User Equipment station.

11. The method of claim 10, further comprising:
determining a respective device type for each of the plurality of User Equipment stations.

12. The method of claim 11, wherein the step of determining the device type for each User Equipment station is based on one or more of: an indication of the device type transmitted by the respective User Equipment station to the cellular network; the International Mobile Equipment Identity, IMEI, of the respective User Equipment station; the traffic pattern for previous communications between the cellular network and the respective User Equipment station; and a terminal type information transmitted by the respective User Equipment station within Hypertext Transfer Protocol, HTTP, data.

13. A method of determining, at an entity of a cellular network, a device type for a User Equipment station within the cellular network on the basis of one or more of: the International Mobile Equipment Identity, IMEI, of the User Equipment station; the traffic pattern for previous communications between the cellular network and the User Equipment station; and a terminal type information transmitted by the User Equipment station within Hypertext Transfer Protocol, HTTP, data.

14. The method of any of claims 10 to 13, wherein the device type indicates one or more of: the hardware composition of the User Equipment station; the hardware configuration of the User Equipment station; the operating system used by the User Equipment station; the manufacturer of the User Equipment station; and the model of the User Equipment station.

15. A computer program, configured when operated by a processor to carry out the method of any of claims 10 to 14.
